# EUROPÄISCHE PATENTSCHRIFT

(11) **EP 1 574 460 B1**
(45) Veröffentlichungstag und Bekanntmachung des Hinweises auf die Patenterteilung: **06.09.2006**
(21) Anmeldenummer: 05003345.5
(22) Anmeldetag: 17.02.2005
(51) Int. Cl.: B65G 47/84

(54) **Transporteur für Flaschen oder dergleichen Behälter**
Device for transporting bottles and similar containers
Dispositif de transport pour bouteilles ou récipients similaires

(30) Priorität: 10.03.2004 DE 202004003716 U
(43) Veröffentlichungstag der Anmeldung: 14.09.2005
(73) Patentinhaber: KHS AG, 44143 Dortmund (DE)
(72) Erfinder: Bernhard, Herbert, 55578 Wolfsheim (DE); Krieg, Andreas, 67596 Dittelsheim/Hessloch (DE)

(56) Entgegenhaltungen:
- EP-A- 0 939 044
- DE-U1- 29 915 927
- US-A- 5 743 377

## Beschreibung

Die Neuerung bezieht sich auf einen Transporteur für Flaschen oder dgl. Behälter gemäß Oberbegriff Anspruch 1.

Transporteure dieser Art sind grundsätzlich bekannt und werden vielfach auch als Klemmsterne bezeichnet. Für den Transport sind die Flaschen jeweils im Bereich ihrer Flaschenmündung durch Klemmen oder Einspannen an den Greiferarmen der Greiferelemente gehalten. Vielfach ist es nun erwünscht, mit ein und demselben Transporteur Flaschen mit unterschiedlichem Mündungsdurchmesser, d.h. mit unterschiedlichem Außendurchmesser im Bereich der Flaschenmündung zu transportieren, beispielsweise mit einem Außendurchmesser von 28 mm oder einem Außendurchmesser von 38 mm.

Eine derartige Vorrichtung wurde z.B. durch die US-A-5 743 377 vorgestellt. Diese Schrift zeigt verschiedene Transportvorrichtungen bzw. Klemmsterne, bei welchen die Ansteuerungen der Greifelemente mehrere Rastpositionen aufweisen, welche dazu dienen, die Greifelemente auf das Greifen von Behältern mit unterschiedlichen Durchmessern einzustellen. Von dieser Schrift ist hinsichtlich der Rastverbindungen im Wesentlichen vorgesehen, diese durch das formschlüssige Ineinandergreifen der beteiligten Elemente zu realisieren.
Dieses formschlüssige Ineinandergreifen bedingt beim Öffnen und Schließen der gebildeten Greifelemente einen nicht kontinuierlichen Bewegungsablauf, durch welchen die, die formschlüssige Verbindung bildenden Elemente einem erhöhten Verschleiß unterworfen, was als nachteilig anzusehen ist.

Aufgabe der Neuerung ist es, einen Transporteur mit einer Vielzahl von Greiferelementen an dem Umfang eines um eine Maschinenachse rotierend antreibbaren Transportelementes aufzuzeigen, der problemlos auf wenigstens zwei unterschiedliche Mündungsgrößen einstellbar ist, und dabei die Nachteile der Ausbildung von formschlüssigen Rastverbindungen vermeidert.
Zur Lösung dieser Aufgabe ist ein Transporteur entsprechend dem Anspruch 1 ausgebildet.

Die Steuerung der Greiferarme zwischen der geschlossenen und der geöffneten Stellung erfolgt bei dem neuerungsgemäßen Transporteur durch eine Nockensteuerung mit einem Steuerelement, z.B. Steuernocken, das bzw. der zwischen wenigstens drei unterschiedlichen Stellungen bewegbar ist, wobei wenigstens zwei dieser Stellungen des Steuerelementes in einem Betriebszustand der Nockensteuerung der geschlossenen und der offenen Stellung der Greiferarme für Behälter einer kleineren Mündungsgröße und wenigstens zwei dieser Stellungen des Steuerelementes in einem weiteren Betriebszustand der Nockensteuerung der geschlossenen und geöffneten Stellung der Greiferarme für Behälter einer weiteren größeren Mündungsgröße entsprechen. Durch Aktivieren wenigstens eines äußeren, d. h. mit dem Transportelement nicht mitbewegten Steuerelement sind die Betriebszustände der Nockensteuerung sämtlicher Greiferelemente bei umlaufendem Transportelement umschaltbar.

Bei einer bevorzugten Ausführungsform der Neuerung ist die Nockensteuerung von einem um eine Achse drehbaren Steuernocken gebildet, der dann bei einer Verwendung des Transporteurs für Behälter mit zwei unterschiedlichen Mündungsgrößen wenigstens drei Stellungen aufweist, von denen
- eine erste der geschlossenen Stellung der Greiferarme für eine kleinere Mündungsgröße,
- eine zweite der offenen Stellung der Greiferarme für eine kleinere Mündungsgröße, aber auch der geschlossenen Stellung der Greiferarme für eine größere Mündungsgröße und
- die dritte der offenen Stellung der Greiferarme für die größere Mündungsgröße entsprechen.

Weiterbildungen der Neuerung sind Gegenstand der Unteransprüche. Die Neuerung wird im Folgenden anhand der Figuren an einem Ausführungsbeispiel näher erläutert. Es zeigen:
- Fig. 1: einen als Klammerstern ausgebildeten Transporteur in vereinfachter Darstellung und in Draufsicht;
- Fig. 2: in Einzeldarstellung eines der Klammer- oder Greiferelemente des Transporteurs in einer ersten Stellung der Greiferarme;
- Fig. 3: einen Schnitt entsprechend der Linie I - I der Fig. 2;
- Fig. 4 u. 5: Darstellungen wie Figuren 2 und 3 mit in einer zweiten Stellung befindlichen Greiferarmen;
- Fig. 6 u. 7: Darstellungen wie Figuren 2 und 3 mit in einer dritten Stellung befindlichen Greiferarmen.

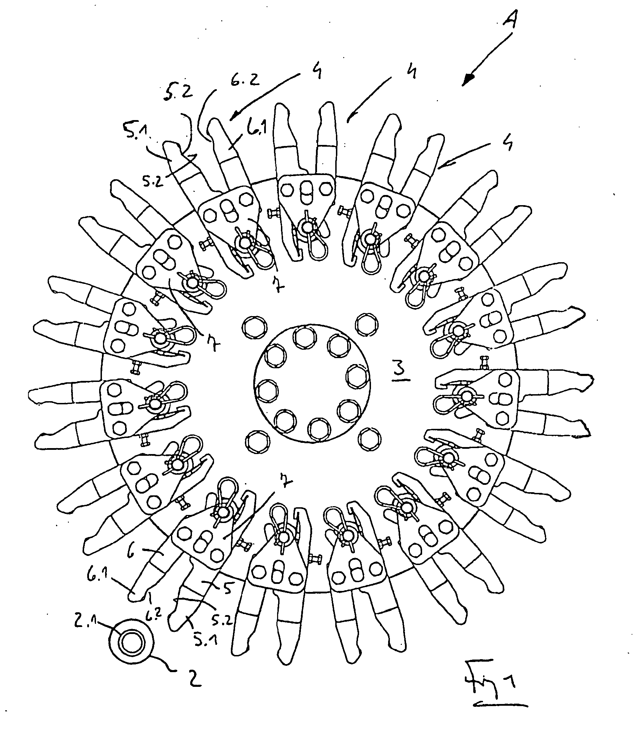

Der in den Figuren allgemein mit 1 bezeichnete und als Klammerstern ausgebildete Transporteur dient generell zum Transportieren von Behältern, insbesondere Flaschen 2, und dabei speziell von Kunststoffflaschen (PET-Flaschen), die in der Figur 1 in Draufsicht angedeutet sind. Der Transporteur 1 ist dabei z. B. Bestandteil einer Transportstrecke, beispielsweise zwischen zwei Behandlungsmaschinen, z. B. zwischen einem Rinser und einer Füllmaschine usw. oder aber Bestandteil einer solchen Behandlungsmaschine, beispielsweise der Ein- oder Auslaufstern einer Füllmaschine. Der Transporteur 1 besteht im Wesentlichen aus einem um eine Maschinenachse, beispielsweise um eine vertikale Maschinenachse umlaufend angetriebenen Rad 3 (Pfeil A der Figur 1) und aus einer Vielzahl von am Umfang des Rades 3 in gleichmäßigen Winkelabständen angeordneten Greiferelementen 4.

Jedes Greiferelement 4 besitzt zwei Greiferarme 5 und 6, die mit ihren freien Enden 5.1 und 6.1 radial über den Umfang des Rades 3 wegstehen, und zwar jeweils mit gleicher Länge. An den Enden 5.1 und 6.1 bilden die Greiferarme 5 und 6 an einander zugewandten Seiten jeweils eine in der Draufsicht der Figur 1 leicht konvex gekrümmte Klemm- oder Greiferfläche 5.2 bzw. 6.2, an denen die jeweilige Flasche 2 an einer Aufnahmeposition im Bereich ihrer Mündung durch Schließen der Greiferarme 5 und 6 eingespannt und über einen Winkelbereich der Drehbewegung des Transporteurs 1 mitgeführt wird. An einer Abgabeposition wird die jeweilige Flasche 2 dann durch Öffnen der Greiferarme 5 und 6 wieder frei geben.

Hierfür sind die Greiferarme 5 und 6 durch ortsfeste, mit dem Rad 3 nicht mitdrehende und nicht dargestellte Steuernocken zwischen der die Flaschen 2 greifenden und haltenden geschlossenen Stellung, in der die Greiferflächen 5.2 und 6.2 gegen den Mündungsbereich der jeweiligen Flasche 2 federnd anliegen, und einer zweiten Stellung steuerbar, in der die die Greiferarme 5 und 6 die jeweilige Flasche 2 freigeben, d.h. die Greiferflächen 5.2 und 6.2 soweit auseinander bewegt sind, dass sie nicht mehr gegen den Mündungsbereich der betreffenden Flasche 2 anliegen.

Eine Besonderheit des Transporteurs 1 besteht darin, dass er bzw. dessen Greiferelemente 4 für die Verwendung bei Flaschen 2 mit zwei unterschiedlichen Mündungsgrößen, d. h. mit zwei unterschiedlichen Außendurchmessern an der Flaschenmündung 2.1 geeignet ist.

Hierfür weisen die Greiferarme 5 und 6 in der nachstehend noch näher beschriebenen Weise drei Stellungen auf, und zwar
eine erste Stellung, in der die Greiferflächen 5.2 und 6.2 einen ersten Abstand voneinander aufweisen, der z.B. etwas kleiner ist als die erste Mündungsgröße und die somit dem geschlossenen Zustand der Greiferarme 5 und 6 zum Halten der Flaschen mit der kleineren Mündungsgröße entspricht,
eine zweite Stellung mit einem Abstand der Greiferflächen 5.1 und 6.1, der größer ist als die erste Mündungsgröße, aber kleiner ist als die zweite Mündungsgröße, sodass dieser Zustand der offenen Stellung der Greiferarme für die Flaschen der ersten Mündungsgröße, aber der geschlossenen Stellung der Greiferarme für die Flaschen mit der zweiten größeren Mündungsgröße entspricht, und
eine dritte Stellung, bei der der Abstand der Greiferflächen 5.2 und 6.2 größer ist als die zweite größere Mündungsgröße und der somit der offenen Stellung der Greiferarme 5 und 6 für diese Flaschen entspricht.

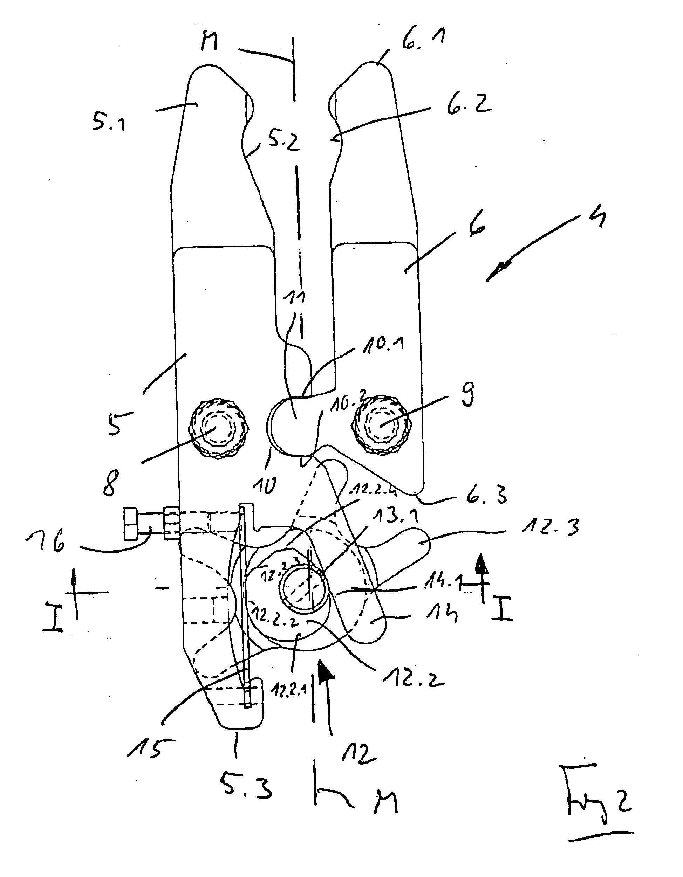

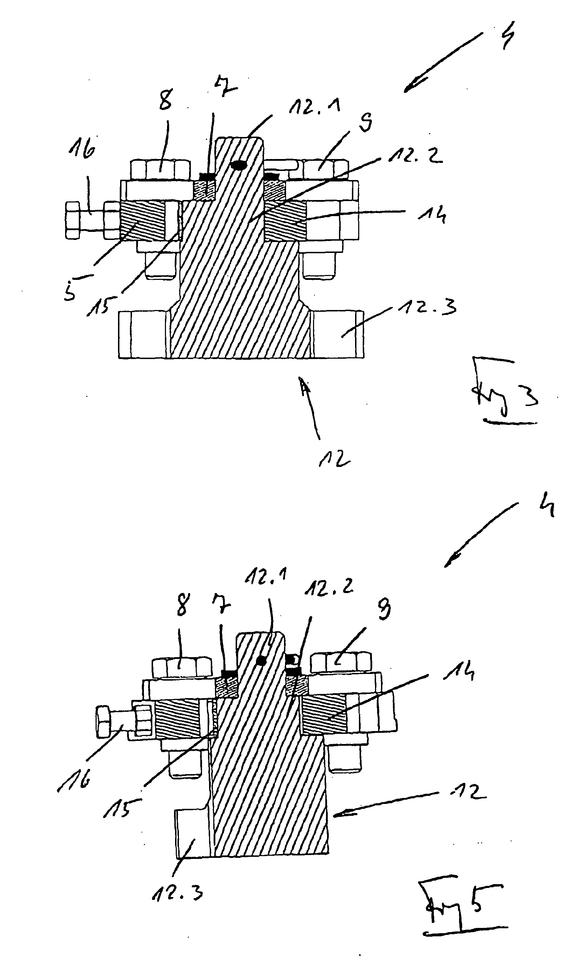

Zur weiteren Erläuterung wird zunächst auf die Figuren 2 und 3 Bezug genommen. Wie in diesen Figuren dargestellt, sind die Greiferarme 5 und 6 jedes Greiferelementes 4 an einem plattenförmigen Träger 7 schwenkbar gelagert, und zwar mit Hilfe von Gelenkbolzen 8 bzw. 9, die bei montierten Greiferelementen 5 und 6 in Umfangsrichtung des Rades 3 gegeneinander versetzt sind und deren Achsen parallel zur Achse des Rades 3 angeordnet ist. Mit M ist in der Figur 2 eine Mittelebene bezeichnet, die eine gemeinsame Ebene der Achse der Gelenkbolzen 8 und 9 senkrecht schneidet, in der Mitte zwischen diesen Gelenkbolzen verläuft und zu der sich die Greiferarme 5 und 6 beim Schwenken synchron aber gegenläufig spiegelbildlich bewegen.

Im Detail ist der Greiferarm 5 mittels des Gelenkbolzens 8 etwa in seiner Mitte zwischen dem außenliegenden Ende 5.1 und einem bezogen auf die Achse des Rades 3 weiter innen liegenden Ende 5.3 am Träger 7 schwenkbar vorgesehen. Der andere Greiferarm 6 ist mittels des Gelenkbolzens 9 an seinem bezogen auf die Achse des Rades 3 innen liegenden Ende 6.3 schwenkbar gehalten. An der dem Greiferarm 6 zugewandten Seite ist der Greiferarm 5 in der Nähe des Gelenkbolzens 8 mit einer Ausnehmung 10 versehen, die eine um eine Achse parallel zur Achse des Gelenkbolzens 8 nach innen gewölbte Kreiszylinderfläche bildet und in die das Ende eines Fortsatzes 11 des Greiferarmes 6 eingreift. Der ebenfalls in unmittelbarer Nähe des Gelenkbolzens 9 vorgesehene Fortsatz oder Zahn 11 bildet an seinem Ende ein Kopfstück, welches um eine Achse parallel zur Achse des Gelenkbolzens 9 kreiszylinderförmig nach außen gewölbt ist. Der Fortsatz 11 bzw. dessen Kopf liegt in der Nähe der Öffnung der Ausnehmung 10 an zwei gegenüberliegenden Seiten bei 10.1 und 10.2 gegen die von der Ausnehmung 10 gebildete kreiszylinderförmige Fläche an. Die beiden Bereiche 10.1 und 10.2 weisen dabei von den Achsen der Gelenkbolzen 8 und 9 jeweils den selben Abstand auf und liegen im Bereich der Mittelebene M, sodass beim Schwenken des Greiferarmes 5 um die Achse des Gelenkbolzens 8 der Greiferarm 6 synchron, aber gegensinnig um die Achse des Gelenkbolzens 9 geschwenkt wird, d. h. die Ausnehmungen 10 und der Fortsatz 11 wirken ähnlich einer Zahnradverbindung zwischen den beiden Greiferarmen 5 und 6. Weiterhin sind die Ausnehmung 10 und der Fortsatz 11 insbesondere auch hinsichtlich ihrer Größe so angepasst, dass beim Schwenken des Greiferarmes 5 ein möglichst spielfreies Schwenken des Greiferarmes 6 erreicht ist.

Das Schwenken des Greiferarmes 5 erfolgt über einen Steuernocken 12, der um seine parallel zu den Achsen der Gelenkbolzen 8 und 9 orientierte Nockenachse drehbar gelagert ist, und zwar an seinem in der Figur 3 oberen Ende u. a. mit Hilfe eines angeformten, zylinderförmigen Abschnitt 12.1 in einer entsprechenden Lagerbohrung des Trägers 7. Die Achse des Steuernockens 12 liegt in der Mittelebene M und mit Abstand von den Gelenkbolzen 8 und 9 zum rückwärtigen Ende 5.3 des Greiferarmes 5 hin versetzt. Die beiden Bereiche 10.1 und 10.2 liegen somit auf der Mittelebene M.

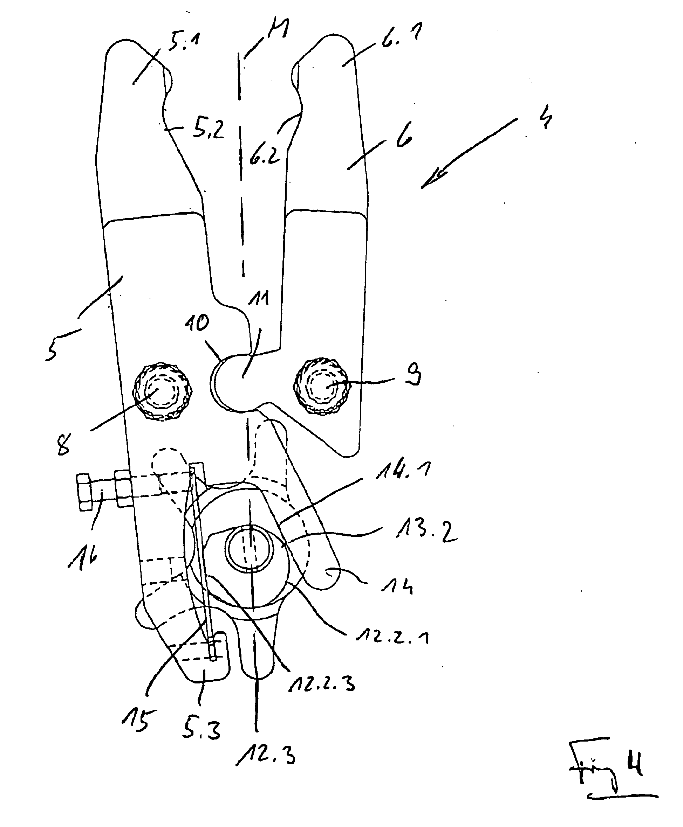

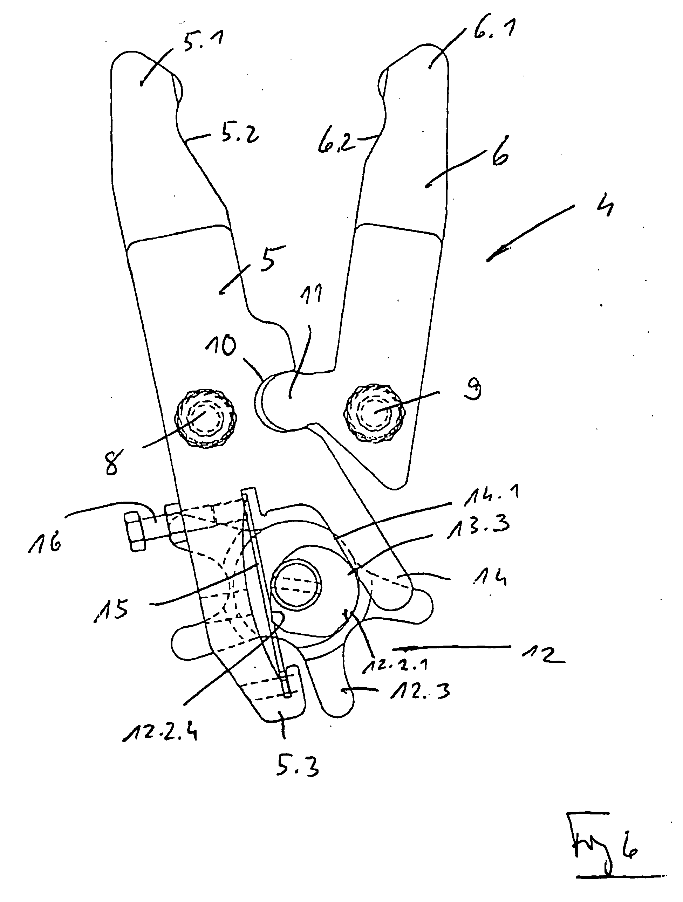

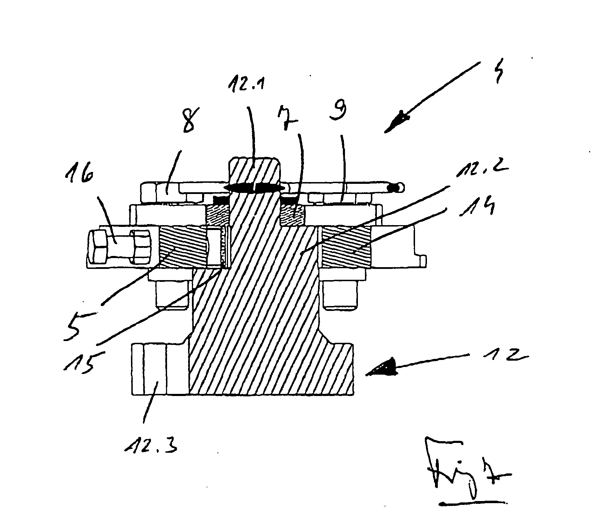

Der Nocken 12 weist bei der dargestellten Ausführungsform drei unterschiedliche, definierte Drehstellungen auf, nämlich die der ersten Stellung der Greiferarme 5 und 6 entsprechende Drehstellung entsprechend Figur 2, die der zweiten Stellung der Greiferarme 5 und 6 entsprechende Drehstellung entsprechend Figur 4 und die der dritten Stellung der Greiferarme 5 und 6 entsprechende Drehstellung entsprechend Figur 6.

An den Abschnitt 12.1 anschließend besitzt der Steuernocken 12 einen Exzenter-Abschnitt 12.2, der den eigentlichen Steuerabschnitt des Nockens 12 darstellt und eine Umfangsfläche aufweist, die sich aus einer relativ zur Achse des Nockens 12 schneckenlinienartig verlaufenden Exzenter- oder Steuerfläche 12.2.1 und aus einem polygonartig verlaufenden Umfangsbereich zusammensetzt, der von mehreren ebenen Rastflächen 12.2.2, 12.2.3 und 12.2.4 gebildet ist. Die Exzenter- oder Steuerfläche 12.2.1 weist in eine angenommene Umfangsrichtung ausgehend von dem in der Figur 2 mit 13.1 bezeichneten Bereich mit dem geringsten Abstand von der Nockenachse einen zunehmend größeren Abstand von dieser Achse auf. Der Abstand des anschließenden polygonartig verlaufenden Umfangsbereichs von der Nockenachse verringert sich in der angenommenen Umfangsrichtung wieder bis an den Bereich 13.1.

Im Bereich des Steuernockens 12 ist der Greiferarm 5 gabelartig ausgebildet, und zwar dadurch, dass er dort mit einem angeformten Steuerarm 14 versehen ist, der über die dem Greiferarm 6 zugewandten Seite des Greiferarmes 5 wegsteht und eine Steuerfläche 14.1 bildet, die mit der Exzenterfläche 12.2.1 des Steuernockens 12 zusammenwirkt. Die von dem Steuerarm 14 gebildete Steuerfläche 14.1 befindet sich auf der dem Greiferarm 5 abgewandten Seite der Mittelebene M.

An seinem in der Figur 3 unterem Ende ist der Steuernocken 12 mit vier radial über den Umfang des Steuernockens wegstehenden Fingern 12.3 ausgebildet, die bei umlaufendem Rad 3 zur Steuerung des Steuernockens 12 und damit zur Steuerung der Greiferarme 5 mit nicht dargestellten mit dem Rad 3 nicht umlaufenden Steuerelementen, beispielsweise Steuerstiften zusammenwirken.

Der Steuerfläche 14.1 gegenüberliegend ist am Greiferarm 5 eine federnde Anlagefläche für den Abschnitt 12.2 gebildet, und zwar bei der dargestellten Ausführungsform von einer Blattfeder 15. Diese federnde Anlagefläche bzw. Blattfeder 15 liegt in der jeweiligen Stellung des Greiferelementes 4 bzw. in den entsprechenden Stellungen des Nockens 12 gegen eine der Rastflächen 12.2.2, 12.2.3 oder 12.2.4 an und sorgt gleichzeitig für ein federndes Anliegen oder Festklemmen der jeweiligen Flaschenmündung 2.1 zwischen den Greiferflächen 5.2 und 6.2 bei geschlossenem Greiferelement 4.

Die Figur 2 und 3 zeigen für einen ersten Betriebszustand des Greiferelementes 4 die geschlossene Stellung der Greiferarme 5 und 6. Der Nocken 12 so gedreht, dass die Steuerfläche 14.1 gegen die Exzenterfläche 12.2.1 am Bereich 13.1 mit dem geringsten axialen Abstand anliegt und sich die Blattfeder 15 elastisch gegen die Rastfläche 12.2.2 abstützt.

Die Figur 4 und 5 zeigen für den ersten Betriebszustand des Greiferelementes 4 die geöffnete Stellung der Greiferarme 5 und 6, wobei diese Stellung zugleich auch die geschlossene Stellung der Greiferarme 5 und 6 für einen zweiten Betriebszustand ist. Der Nocken 12 ist so gedreht, dass die Steuerfläche 14.1 gegen die Exzenterfläche 12.2.1 am Bereich 13.2 mit größerem axialen Abstand anliegt und sich die Blattfeder 15 an der Rastfläche 12.2.3 abstützt.

Die Figur 6 und 7 zeigen für den zweien Betriebszustand des Greiferelementes 4 die geöffnete Stellung der Greiferarme 5 und 6, in welcher die Exzenterfläche 12.2.1 mit einem Bereich 13.3 mit dem größten radialen Abstand gegen die Steuerfläche 14.1 anliegt und sich die Blattfeder 15 gegen die Rastfläche 12.2.4 abstützt.

In allen Stellungen ist der Steuernocken 12 durch die Blattfeder 15 gegen ein unerwünschtes Verdrehen soweit gesichert, dass erst durch Aufwendung eines gewissen Drehmomentes an den Steuerfingern 12.3 ein Drehen des Steuernockens 12 möglich ist.

Die Blattfeder 15, die mit ihrer Längserstreckung in Richtung der Längserstreckung des Greifarmes 5 orientiert ist und mit ihren Oberflächenseiten in Ebenen parallel zu den Achsen der Gelenkbolzen 8 und 9 sowie der Achse des Steuernockens 12 liegt, ist an ihrem dem Ende 5.3 benachbarten Ende am Greiferarm 5 befestigt. Am anderen Ende stützt sich die Blattfeder 15 an einem von einer Einstellschraube 16 gebildeten Gegenlager ab, sodass mit dieser Einstellschraube 16 die Vorspannung der Blattfeder und damit u. a. auch die Feder- bzw. Klemmkraft der Greiferarme 5 und 6 eingestellt werden kann.

Die mit den Fingern 12.3 zusammenwirkenden äußeren Steuerelemente sind so ausgebildet, dass im normalen Betrieb des Transporteurs 1 die Greiferelemente 4 bzw. deren Steuernocken 12 nur zwischen zwei benachbarten Stellungen bewegt werden und zwar entweder in dem ersten Betriebszustand der Greiferelemente 4 zwischen der ersten und der zweiten Stellung beim Verarbeiten von Flaschen mit der kleineren Mündungsgröße oder in dem zweiten Betriebszustand der Greiferelemente 4 zwischen der zweiten und dritten Stellung beim Verarbeiten von Flaschen mit der zweiten, größeren Mündungsgröße.

Das Umschalten zwischen diesen beiden Betriebszuständen erfolgt dadurch, dass der Steuernocken um eine Teilung des von den Fingern 12.3 gebildeten Steuersterns weiter geschaltet wird, sodass sich der Steuernocken 12 nach dem Umschalten in einer neuen Ausgangsstellung befindet, in der dann mit den äußeren Steuerelementen wiederum das Steuern der Steuernocken 12 zwischen den beiden, dem aktuellen Betriebszustand entsprechenden Stellungen erfolgt. Das Umschalten zwischen den Betriebszuständen erfolgt während einer vollen Drehung des Rades 3 durch wenigstens einen zusätzlichen, äußeren Steuernocken, der für das Umschalten beispielsweise pneumatisch in die Bewegungsbahn der Steuerfinger 12.3 hineinbewegt ist.

Die Neuerung wurde voranstehend an einem Ausführungsbeispiel beschrieben. Es versteht sich, dass zahlreiche Änderungen sowie Abwandlungen möglich sind, ohne dass dadurch der der Neuerung zugrunde liegende Erfindungsgedanke verlassen wird.

### Bezugszeichenliste

- 1: Klammerstern oder Transporteur
- 2: Flasche
- 3: Rad
- 4: Greiferelement
- 5, 6: Greiferarm
- 5.1, 6.1: Ende des Greiferarmes
- 5.2, 6.2: Greiferfläche
- 5.3, 6.3: innenliegendes Ende
- 7: Träger
- 8, 9: Gelenkbolzen
- 10: Ausnehmung
- 10.1, 10.2: Anlagebereich
- 11: Fortsatz
- 12: Steuernocken
- 12.1: Lagerabschnitt des Steuernockens
- 12.2: Steuerabschnitt des Steuernockens
- 12.2.1: Exzenter
- 12.2.2 - 12.2.4: Rastfläche
- 13, 13.1, 13.2: Anlagebereich
- 14: Steuerarm
- 14.1: Steuerfläche
- 15: Blattfeder
- 16: Verstellschraube
- M: Mittelebene

## Patentansprüche

1. Transporteur für Flaschen (2) oder dergleichen Behälter, mit mehreren, am Umfang eines um eine Maschinenachse umlaufend antreibbaren radartigen Transportelementes (3) vorgesehenen Greiferelementen (4), die jeweils wenigstens zwei Greiferarme (5, 6) aufweisen, die Greiferflächen (5.2, 6.2) zum Greifen der Behälter im Bereich einer Behältermündung (2.1) bilden und zum Schwenken zwischen einer geschlossenen, den jeweiligen Behälter (2) haltenden Stellung und einer geöffneten, den Behälter (2) freigebenden Stellung mit Gelenken (8, 9) an einem Träger oder Lager (7) vorgesehen sind, sowie mit einer Nockensteuerung mit Steuerelement (12), die bei umlaufenden Transportelement (3) durch äußere für sämtliche Greiferelemente (4) gemeinsame und mit dem Transportelement (3) nicht mitbewegten Steuerelementen zwischen dem geschlossenen Zustand der Greiferarme und dem geöffneten Zustand der Greiferarme (5, 6) entsprechenden Stellungen bewegt ist, wobei für die wahlweise Verwendung des Transporteurs (1) bei Behältern (2) mit einem ersten, kleineren Mündungsdurchmesser oder einem zweiten, größeren Mündungsdurchmesser das Steuerelement (12) der Nockensteuerung mehr als zwei Stellungen aufweist, nämlich für den geschlossenen Zustand und den geöffneten Zustand der Greiferarme (5, 6) für Behälter mit einer ersten, kleineren Behältermündung und für den geschlossenen und geöffneten Zustand für Behälter (2) mit dem größeren Mündungsquerschnitt, **dadurch gekennzeichnet, dass** wenigstens ein Greifarm (5) ein Federelement (15) aufweist und dass die Steuerfläche des Steuerelementes (12) der Nockensteuerung von einer Exzenterfläche (12.2.1) gebildet ist und dass das Steuerelement (12) für jede Stellung eine mit dem Federelement (15) des Greiferarmes (5) zusammenwirkende Rastfläche (12.2.2, 12.2.3, 12.2.4) aufweist.

2. Transporteur nach Anspruch 1, **dadurch gekennzeichnet, dass** das Steuerelement (12) der Nockensteuerung wenigstens drei Stellungen aufweist, von denen die erste Stellung dem geschlossenen Zustand der Greiferarme (5, 6) für die Behälter (2) mit dem ersten Mündungsdurchmesser, die zweite Stellung dem geöffneten Zustand der Greiferarme (5, 6) für die Behälter mit dem ersten Mündungsdurchmesser und zugleich dem geschlossenen Zustand der Greiferarme (5, 6) für die Behälter (2) mit dem zweiten Mündungsdurchmesser entspricht, sowie eine dritte Stellung, die dem geöffneten Zustand der Greiferarme (5, 6) für die Behälter (2) mit dem zweiten Mündungsdurchmesser entspricht.

3. Transporteur nach einem der vorhergehenden Ansprüche, **dadurch gekennzeichnet, dass** das Steuerelement (12) mit einer Steuerfläche (12.2.1) gegen eine Gegenfläche (14.1) wenigstens eines Greiferarmes (5) anliegt und sich zugleich der Gegenfläche (14.1) gegenüberliegend federnd an dem wenigstens einem Greiferarm (5) abstützt.

4. Transporteur nach Anspruch 3, **dadurch gekennzeichnet, dass** sich das Steuerelement (12) der Nockensteuerung der Gegenfläche (14.1) gegenüberliegend an einer von dem Federelement, beispielsweise von einer Blattfeder (15) gebildeten Fläche des Greiferarmes (5) abstützt.

5. Transporteur nach einem der vorhergehenden Ansprüche, **dadurch gekennzeichnet, dass** das Steuerelement der Nockensteuerung ein Steuernocken (12) ist, und dass der Steuernocken (12) um eine Achse, beispielsweise um eine Achse parallel zur Achse der Gelenke (8, 9) der Greiferarme (5, 6) zwischen wenigstens drei definierten Stellungen drehbar ist.

6. Transporteur nach einem der vorhergehenden Ansprüche, **dadurch gekennzeichnet, dass** bei Ausbildung des Steuerelementes der Nockensteuerung als drehbarer Steuernocken (12) die mit der Steuerfläche (12.2.1) zusammenwirkende Gegenfläche (14.1) und die weitere Anlagefläche (15) für den Steuernocken (12) beidseitig von der Drehachse des Nockens (12) vorgesehen sind.

7. Transporteur nach einem der vorhergehenden Ansprüche, **dadurch gekennzeichnet**, das ein Greiferarm (5) an einem der Greiffläche (5.2) entfernt liegenden Ende eine Öffnung aufweist, und dass in dieser Öffnung das Steuerelement (12) der Nockensteuerung mit seiner Steuerfläche (12.2.1) sowie mit einer weiteren Fläche (12.2.2, 12.2.3, 12.2.4) am Federelement abstützenden Fläche angeordnet ist, und dass im Bereich der Öffnung die Gegenfläche (14.2) des Greiferarmes (5) sowie die federnde Anlagefläche (15) vorgesehen sind.

8. Transporteur nach einem der vorhergehenden Ansprüche, **dadurch gekennzeichnet, dass** die beiden Greiferarme (5, 6) antriebsmäßig miteinander verbunden sind, und zwar derart, dass beim Schwenken eines Greiferarmes (5) der andere Greiferarm synchron aber gegenläufig geschwenkt wird.

9. Transporteur nach einem der vorhergehenden Ansprüche, **dadurch gekennzeichnet, dass** die beiden Greiferarme (5, 6) durch eine zahnradartige Verbindung antriebsmäßig miteinander verbunden sind.

10. Transporteur nach einem der vorhergehenden Ansprüche, **dadurch gekennzeichnet, dass** für die antriebsmäßige Verbindung der Greiferarme ein an einem Greiferarm (6) vorgesehener Zahn oder Fortsatz (11) in eine Ausnehmung (10) am anderen Greiferarm (5) eingreift.

11. Transporteur nach einem der vorhergehenden Ansprüche, **dadurch gekennzeichnet, dass** der die Nockensteuerung bildende Steuernocken (12) mehrere Finger (12.3) für ein Zusammenwirken mit den äußeren Steuerelementen aufweist.

12. Transporteur nach Anspruch 11, **dadurch gekennzeichnet, dass** der Steuernocken (12) insgesamt vier Steuerfinger (12.3) besitzt.

13. Transporteur nach einem der vorhergehenden Ansprüche, **dadurch gekennzeichnet, dass** der Steuernocken (12) einstückig aus Kunststoff oder einem anderen Material hergestellt ist.

## Claims

1. Conveyor for bottles (2) or similar containers, the said conveyor having a plurality of gripping members (4) provided at the circumference of a wheel-like conveying member (3) that is driveable in a rotary manner about a machine axis, each of the said gripping members (4) including at least two gripping arms (5, 6), which form gripping faces (5.2, 6.2) for gripping the container in the region of a container mouth (2.1), and are provided at a carrier or bearing (7) with hinged joints (8, 9) for pivoting between a closed position holding the respective container (2) and an open position releasing the container (2), the said conveyor also including a cam control with control member (12), the said cam control, with the conveying member (3) rotating, being moved by means of outer control members, which are common to all the gripping members (4) and are not entrained with the conveying member (3), between positions corresponding to the closed state of the gripping arms and to the open state of the gripping arms (5, 6), wherein for the selective use of the conveyor (1) with containers (2) with a first, smaller mouth diameter or a second, larger mouth diameter, the control member (12) of the cam control has more than two positions, namely positions for the closed state and the open state of the gripping arms (5, 6) for containers with a first, smaller container mouth and positions for the closed and open state for containers (2) with the larger mouth cross-section, **characterised in that** at least one gripping arm (5) includes a spring member (15) and **in that** the control face of the control member (12) of the cam control is formed by an eccentric face (12.2.1) and **in that** the control member (12) includes for each position a locking face (12.2.2, 12.2.3, 12.2.4) that interacts with the spring member (15) of the gripping arm (5).

2. Conveyor according to claim 1, **characterised in that** the control member (12) of the cam control includes at least three positions, the first position of which corresponds to the closed state of the gripping arms (5, 6) for the containers (2) with the first mouth diameter, the second position corresponds to the open state of the gripping arms (5, 6) for the containers with the first mouth diameter and at the same time to the closed state of the gripping arms (5, 6) for the containers (2) with the second mouth diameter, as well as a third position, which corresponds to the open state of the gripping arms (5, 6) for the container (2) with the second mouth diameter.

3. Conveyor according to one of the preceding claims, **characterised in that** the control member (12) abuts with a control face (12.2.1) against a counter face (14.1) at least of one gripping arm (5) and at the same time is supported opposite the counter face (14.1) in a resilient manner at the at least one gripping arm (5).

4. Conveyor according to claim 3, **characterised in that** the control member (12) of the cam control situated opposite the counter face (14.1) is supported on a face of the gripping arm (5) formed by the spring member, for example a leaf spring (15).

5. Conveyor according to one of the preceding claims, **characterised in that** the control member of the cam control is a control cam (12), and **in that** the control cam (12) is rotatable about an axis, for example about an axis parallel to the axis of the hinged joints (8, 9) of the gripping arms (5, 6) between at least three defined positions.

6. Conveyor according to one of the preceding claims, **characterised in that** with the embodiment of the control member of the cam control as a rotatable control cam (12), the counter face (14.1) that interacts with the control face (12.2.1) and the additional abutment face (15) for the control cam (12) are provided on both sides of the axis of rotation of the cam.

7. Conveyor according to one of the preceding claims, **characterised in that** a gripping arm (5) includes an opening at an end situated remotely from the gripping face (5.2), and **in that** the control member (12) of the cam control is disposed in this opening so as to be supported on the spring member with its control face (12.2.1) and with an additional face (12.2.2, 12.2.3, 12.2.4), and **in that** the counter face (14.2) of the gripping arm (5) and the resilient abutment face (15) are provided in the region of the opening.

8. Conveyor according to one of the preceding claims, **characterised in that** the two gripping arms (5, 6) are interconnected in a driving manner such that when one gripping arm (5) is pivoted, the other gripping arm is pivoted in a synchronous but contra-directional manner.

9. Conveyor according to one of the preceding claims, **characterised in that** the two gripping arms (5, 6) are interconnected in a driving manner by means of a gearwheel-like connection.

10. Conveyor according to one of the preceding claims, **characterised in that** a tooth or projection (11), which is provided at a gripping arm (6) for the driving connection of the gripping arms, engages into a recess (10) at the other gripping arm (5).

11. Conveyor according to one of the preceding claims, **characterised in that** the control cam (12) forming the cam control includes a plurality of fingers (12.3) for interaction with the outer control members.

12. Conveyor according to claim 11, **characterised in that** the control cam (12) has four control fingers (12.3) in all.

13. Conveyor according to one of the preceding claims, **characterised in that** the control cam (12) is produced in one piece from plastics material or another material.

## Revendications

1. Transporteur pour bouteilles (2) ou récipients similaires, comportant plusieurs éléments à pince (4) prévus sur le pourtour d'un élément de transport (3) de type roue pouvant être entraîné en rotation autour d'un axe de machine, lesquels éléments à pince comportent chacun au moins deux bras de pince (5, 6) qui forment des surfaces de pince (5.2, 6.2) pour saisir les récipients dans la zone d'une embouchure de récipient (2.1) et qui sont prévus pour pivoter entre une position fermée, maintenant le récipient (2) respectif, et une position ouverte libérant le récipient (2), avec des articulations (8, 9) sur un support ou palier (7), et comportant une commande à came avec élément de commande (12) qui, lorsque l'élément de transport (3) tournant est déplacé par des éléments de commande extérieurs, communs à tous les éléments à pince (4) et non déplacés avec l'élément de transport (3), entre des positions correspondant à l'état fermé des bras de pince et à l'état ouvert des bras de pince (5, 6), pour l'utilisation au choix du transporteur (1) avec des récipients (2) présentant un premier diamètre d'embouchure plus petit ou un deuxième diamètre d'embouchure plus grand, l'élément de commande (12) de la commande à came présentant plus de deux positions à savoir pour l'état fermé et l'état ouvert des bras de pince (5, 6) pour des récipients avec une première embouchure plus petite et pour l'état fermé et ouvert pour des récipients (2) de section d'embouchure plus grande, **caractérisé en ce qu'**au moins un bras de pince (5) comporte un élément de ressort (15) et **en ce que** la surface de commande de l'élément de commande (12) de la commande à came est formée par une surface d'excentrique (12.2.1) et **en ce que** l'élément de commande (12) présente pour chaque position une surface d'encliquetage (12.2.2, 12.2.3, 12.2.4) coopérant avec l'élément de ressort (15) du bras de pince (5).

2. Transporteur selon la revendication 1, **caractérisé en ce que** l'élément de commande (12) de la commande à came présente au moins trois positions dont la première position correspond à l'état fermé des bras de pince (5, 6) pour les récipients (2) avec le premier diamètre d'embouchure, la position (2) correspond à l'état ouvert des bras de pince (5, 6) pour les récipients avec le premier diamètre d'embouchure et en même temps à l'état fermé des bras de pince (5, 6) pour les récipients (2) avec le deuxième diamètre d'embouchure, ainsi qu'une troisième position qui correspond à l'état ouvert des bras de pince (5, 6) pour les récipients (2) avec le deuxième diamètre d'embouchure.

3. Transporteur selon l'une des revendications précédentes, **caractérisé en ce que** l'élément de commande (12) s'applique, par une surface de commande (12.2.1), contre une contre-surface (14.1) d'au moins un bras de pince (5), et prend appui en même temps de manière élastique, face à la contre-surface (14.1), contre l'au moins un bras de pince (5).

4. Transporteur selon la revendication 3, **caractérisé en ce que** l'élément de commande (12) de la commande à came prend appui, face à la contre-surface (14.1), contre une surface formée par un élément de ressort, par exemple un ressort à lame (15), du bras de pince (5).

5. Transporteur selon l'une des revendications précédentes, **caractérisé en ce que** l'élément de commande de la commande à came est une came de commande (12), et **en ce que** la came de commande (12) peut tourner autour d'un axe, par exemple autour d'un axe parallèle à l'axe des articulations (8, 9) des bras de pince (5, 6), entre au moins trois positions définies.

6. Transporteur selon l'une des revendications précédentes, **caractérisé en ce que** pour la réalisation de l'élément de commande de la commande à came en tant que came de commande (12) rotative, la contre-surface (14.1) coopérant avec la surface de commande (12.2.1) et l'autre surface de contact (15) pour la came de commande (12), sont prévues des deux côtés de l'axe de rotation de la came (12).

7. Transporteur selon l'une des revendications précédentes, **caractérisé en ce qu'**un bras de pince (5) présente, à une extrémité éloignée de la surface de préhension (5.2), une ouverture, et **en ce que** dans cette ouverture est disposé l'élément de commande (12) de la commande à came avec sa surface de commande (12.2.1) ainsi qu'avec une autre surface (12.2.2, 12.2.3,12.2.4) prenant appui sur l'élément de ressort, et **en ce que** dans la zone de l'ouverture sont prévues la contre-surface (14.2) du bras de pince (5) ainsi que la surface de contact (15) élastique.

8. Transporteur selon l'une des revendications précédentes, **caractérisé en ce que** les deux bras de pince (5,6) sont reliés entre eux en entraînement et ce de manière que lors du pivotement d'un bras de pince (5), l'autre bras de pince soit pivoté de manière synchrone mais en sens contraire.

9. Transporteur selon l'une des revendications précédentes, **caractérisé en ce que** les deux bras de pince (5,6) sont reliés entre eux en entraînement par une liaison de type roue dentée.

10. Transporteur selon l'une des revendications précédentes, **caractérisé en ce que** pour la liaison en entraînement des bras de pince une dent ou prolongement (11), prévu sur un bras de pince (6), s'engage dans un évidement (10) de l'autre bras de pince (5).

11. Transporteur selon l'une des revendications précédentes, **caractérisé en ce que** la came de commande (12) formant la commande à came, comporte plusieurs doigts (12.3) pour une coopération avec les éléments de commande extérieurs.

12. Transporteur selon la revendication 11, **caractérisé en ce que** la came de commande (12) possède au total quatre doigts de commande (12.3).

13. Transporteur selon l'une des revendications précédentes, **caractérisé en ce que** la came de commande (12) est réalisée d'une seule pièce en matière synthétique ou dans un autre matériau.
